# EUROPÄISCHE PATENTSCHRIFT

(11) **EP 4 426 466 B1**
(45) Veröffentlichungstag und Bekanntmachung des Hinweises auf die Patenterteilung: **15.04.2026**
(21) Anmeldenummer: 22801057.5
(22) Anmeldetag: 07.10.2022
(51) Int. Cl.: B01D 46/00, B01D 46/24, B01D 46/52, B01D 46/64, H01M 8/0662

(54) **RUNDFILTERELEMENT UND FILTEREINRICHTUNG**
ROUND FILTER ELEMENT AND FILTER DEVICE
ÉLÉMENT FILTRANT ROND ET DISPOSITIF FILTRANT

(30) Priorität: 04.11.2021 DE 102021128717
(43) Veröffentlichungstag der Anmeldung: 11.09.2024
(73) Patentinhaber: MANN+HUMMEL GmbH, 71636 Ludwigsburg (DE)
(72) Erfinder: SCHMID, Daniel, 74343 Sachsenheim (DE); HETTKAMP, Philipp, 71711 Steinheim (DE); HALLBAUER, Eva, 95502 Himmelkron (DE); CHOWANIETZ, Volkmar, 95448 Bayreuth (DE); RIEGER, Mario, 71638 Ludwigsburg (DE)
(74) Vertreter: Mann + Hummel Intellectual Property
(86) Internationale Anmeldenummer: PCT/EP2022/077881
(87) Internationale Veröffentlichungsnummer: WO 2023/078632

(56) Entgegenhaltungen:
- EP-A2- 0 159 697
- DE-A1- 102013 008 392
- US-A- 3 747 303
- US-A- 6 152 996
- US-A1- 2009 230 052

## Beschreibung

### Technisches Gebiet

Die Erfindung bezieht sich auf ein Rundfilterelement zur Filtration eines gasförmigen Fluids mit einem als Hohlkörper ausgebildeten Partikel-Filtermediumkörper zur Partikelfiltration und einem separaten, als Hohlkörper ausgebildeten Schadgas-Filtermedium-körper zur Schadgasfiltration nach dem Oberbegriff des Anspruches 1. Weiterhin betrifft die Erfindung eine Filtereinrichtung mit einem Filtergehäuse und einem solchen Rundfilterelement, insbesondere für Brennstoffzellenanwendungen.

### Stand der Technik

In DE 10 2018 215 603 A1 wird ein modulares Filterelement für Brennstoffzellenanwendungen beschrieben. Das Filterelement umfasst zwei hohlzylindrische Filtermodule in einem Gehäuse, wobei die Filtermodule jeweils aus einem gefalteten Filtermaterial bestehen und konzentrisch zueinander angeordnet sind. Das Filterelement wird radial von au-ßen nach innen durchströmt, wobei das gereinigte Gas axial abgeleitet wird. Der Filterkörper des ersten Filtermoduls dient zur Partikelfiltration, der Filterkörper des zweiten Filtermoduls weist ein Aktivkohlemedium auf, um unerwünschte Gase auszufiltern. Die beiden Filterkörper sind lösbar miteinander verbunden.

Auch in US 2003/0096152 A1 wird ein Rundfilterelement beschrieben, das aus zwei konzentrisch angeordneten, hohlzylindrischen Filterkörpern aufgebaut ist, die radial von außen nach innen durchströmt werden. Das Rundfilterelement kann in einer Filtereinrichtung für eine Brennstoffzelle verwendet werden. Der außenliegende Filterkörper bildet einen Partikelfilter, der innenliegende Filterkörper ist als Karbonfilter in Form eines extrudierten porösen Blocks ausgeführt.

In den Dokumenten DE 10 2013 008392 A1, US 3 747 303 A sowie US 6 152 996 A werden weitere Rundfilterelemente aus dem Stand der Technik beschrieben.

### Offenbarung der Erfindung

Der Erfindung liegt die Aufgabe zugrunde, mit einfachen konstruktiven Maßnahmen ein Rundfilterelement zur Filtration eines gasförmigen Fluids, das einen Partikel-Filtermediumkörper und einen Schadgas-Filtermediumkörper aufweist, so auszubilden, dass über einen langen Betriebszeitraum eine hohe Filtrationsleistung gewährleistet ist.

Diese Aufgabe wird erfindungsgemäß mit den Merkmalen des Anspruches 1 gelöst. Die Unteransprüche geben zweckmäßige Weiterbildungen an.

Das erfindungsgemäße Rundfilterelement wird zur Filtration eines gasförmigen Fluids eingesetzt, insbesondere zur Filtration von Luft. Unter einem Rundfilterelement ist ein Filterelement mit ringförmig geschlossenem Filtermedium zu verstehen. Das Filtermedium umgibt mit anderen Worten einen radial innenliegenden Hohlraum. Das Rundfilterelement kann Teil einer Filtereinrichtung sein, die ein öffenbares Filtergehäuse und ein im Filtergehäuse austauschbar aufgenommenes Rundfilterelement aufweist. Die Filtereinrichtung kann in oder an einer Brennstoffzelle verwendet werden, beispielsweise im Zufuhrbereich der Umgebungsluft, die einer Brennstoffzelle zuzuführen ist, um die Umgebungsluft einer Filtration zu unterziehen. Solche Filtereinrichtungen werden auch als Kathodenluftfilter bezeichnet.

Der Partikel-Filtermediumkörper und der Schadgas-Filtermediumkörper, die konzentrisch zueinander angeordnet sind, umschließen einen innenliegenden Strömungsraum. Beide Filtermediumkörper können eine kreisrunde oder eine langgestreckte Querschnittsform aufweisen, z.B. oval oder mit halbkreisförmigen Schmalseiten und geradlinigen oder konvex oder konkav ausgeführten Längsseiten. In Achsrichtung - bezogen auf die Längsachse des Rundfilterelements - weist das Rundfilterelement entweder eine gleichbleibende Querschnittsfläche auf - ist also hohlzylindrisch - oder weist eine veränderliche Querschnittsfläche, insbesondere eine sich kontinuierlich ändernde Querschnittsfläche im Fall eines konischen Elements, auf. Die beiden Filtermediumkörper können darüber hinaus unterschiedliche Längen in axialer Richtung aufweisen.

Die Durchströmung des Rundfilterelements erfolgt entweder radial von innen nach außen oder umgekehrt radial von außen nach innen, wobei der Begriff "radial" sich auf die Längsachse des Rundfilterelements bezieht. Bei einer radialen Durchströmung von innen nach außen wird das ungereinigte Rohfluid zunächst in den innenliegenden Strömungsraum geleitet, von dem aus die radiale Durchströmung der Filtermediumkörper von innen nach außen erfolgt. Bei radialer Durchströmung von außen nach innen wird das gereinigte Fluid im innenliegenden Strömungsraum gesammelt und aus diesem axial abgeleitet.

Der Partikel-Filtermediumkörper befindet sich an der Anströmseite des Rohfluids, der Schadgas-Filtermediumkörper liegt stromab des Partikel-Filtermediumkörpers. Dementsprechend bildet die Anströmseite des Partikel-Filtermediumkörpers die Rohseite und die Abströmseite des Schadgas-Filtermediumkörpers die Reinseite.

Der Schadgas-Filtermediumkörper enthält beispielsweise Aktivkohle und ist in der Lage, Schadgase aus dem gasförmigen Fluid abzuscheiden, beispielsweise Schwefeldioxid, Stickoxide oder Ammoniak. Der Schadgas-Filtermediumkörper kann vorteilhaft ein gefaltetes, aktivkohlehaltiges Filtermedium aufweisen, dessen Stirnkanten verleimt sind, um einen Austrag von Aktivkohlepartikel aus dem Filtermedium zu vermeiden.

Es kann zweckmäßig sein, dass zumindest ein Filtermediumkörper, vorzugsweise beide Filtermediumkörper als ein Filterbalg aus zickzackförmig gefaltetem Filtermedium ausgebildet sind. Alternativ ist es auch möglich, einen oder beide Filtermediumkörper aus einem blockförmigen Material zu fertigen oder als Wickelkörper mit mehreren umeinander gewickelten Medienlagen auszugestalten.

Beide Filtermediumkörper sind an beiden axial gegenüberliegenden Stirnseiten von jeweils einer gemeinsamen Endscheibe strömungsdicht abgedeckt. Die gemeinsame Endscheibe deckt die Stirnseiten beider Filtermediumkörper strömungsdicht ab. Die gemeinsame Endscheibe vereinfacht die Herstellung des Rundfilterelements. Es genügt, die Endscheibe an jeder Stirnseite für beide Filtermediumkörper in einem einzigen Arbeitsschritt herzustellen, beispielsweise als Gussbauteil aus einem vorzugsweise weichelastischen Material auszuführen. Als Endscheibenmaterial kommt beispielsweise Polyurethan, insbesondere PUR-Schaum, oder Kunststoff in Betracht.

Das Rundfilterelement ist mit einem gasdurchlässigen Stützelement versehen, das an der Wandseite eines Filtermediumkörpers angeordnet ist. Bei einem Filtermediumkörper aus gefaltetem Filtermedium bilden die anströmseitigen oder die abströmseitigen Faltenspitzen jeweils eine Wandseite. Das Stützelement hat eine stützende und stabilisierende Funktion, indem der unmittelbar benachbarte Filtermediumkörper sich radial am Stützelement abstützen kann. Dadurch ist auch der zweite, dem Stützelement nicht unmittelbar benachbarte Filtermediumkörper indirekt - über den ersten Filtermediumkörper - radial abgestützt. Das gasdurchlässige Stützelement besteht vorzugsweise aus Kunststoff und weist eine Vielzahl an Öffnungen auf, durch welche das gasförmige Fluid hindurchströmen kann. Das gasdurchlässige Stützelement ist vorzugsweise ein Stützgitter aus Kunststoff. Es kommt aber auch ein metallisches Stützelement, beispielsweise ein Lochblech, in Betracht.

Bei dem erfindungsgemäßen Rundfilterelement ragt das Stützelement in das Material mindestens einer Endscheibe hinein und ist fest mit der Endscheibe verbunden. Diese Ausführung hat den Vorteil, dass über die Endscheiben eine feste Verbindung zwischen den Filtermediumkörpern und dem Stützelement gegeben ist. Die Relativposition des Stützelements zum unmittelbar angrenzenden Filtermediumkörper ist auf diese Weise fixiert. Beide Filtermediumkörper und das Stützelement bilden gemeinsam mit den Endscheiben eine bauliche Einheit.

Gemäß vorteilhafter Ausführung ragt das Stützelement in das Material beider Endscheiben hinein und ist fest mit den beiden Endscheiben verbunden. Dies wird beispielsweise dadurch bewerkstelligt, dass die Endscheiben als Gussbauteil ausgeführt sind und der hineinragende Abschnitt des Stützelements vom Endscheibenmaterial umgeben ist. Diese Ausführung hat den Vorteil, dass bereits mit der Herstellung der Endscheiben die feste Verbindung mit dem Stützelement erreicht wird.

In einer vorteilhaften Ausgestaltung ist einteilig mit dem Stützelement ein umlaufender Dichtungsträger ausgebildet. Dieser kann eine vorzugsweise in axialer Richtung offene Aufnahmenut für ein Dichtungselement aufweisen. Der Dichtungsträger kann nahe einer Stirnseite des Filtermediumkörpers angeordnet und in das Endscheibenmaterial eingebettet sein.

Gemäß noch einer weiteren vorteilhaften Ausführung sind an einer Endscheibe seitlich herausragende Abstützfüße angeordnet. Die Abstützfüße sind insbesondere einteilig mit der Endscheibe ausgebildet, sie können an der Endscheibe seitlich angeformt sein. Die Abstützfüße ermöglichen eine Abstützung insbesondere quer oder radial zur Längsachse, gegebenenfalls auch in Achsrichtung. Die Abstützfüße befinden sich im Fall eines konischen Rundfilterelements, das über seine axiale Länge einen sich ändernden Durchmesser aufweist, vorzugsweise an der schmaleren Seite des Rundfilterelements. Über den Umfang verteilt sind beispielsweise vier Stützfüße an der Endscheibe angeordnet.

Gemäß noch einer weiteren vorteilhaften Ausführung ist an mindestens einer Wandseite eines Filtermediumkörpers eine gasdurchlässige Medienlage angeordnet. Die Medienlage, welche üblicherweise dünn ausgebildet ist und eine geringere Dicke als die Filtermediumkörper aufweist, wirkt reibungsreduzierend, so dass entsprechend eine geringere Reibung als bei einem unmittelbaren Kontakt zwischen Stützelement und einem der Filtermediumkörper oder zwischen den beiden Filtermediumkörpern gegeben ist. Die geringere Reibung reduziert Kräfte in Achsrichtung und in Umfangsrichtung, welche ansonsten bei einem unmittelbaren Kontakt auf den Filtermediumkörper wirken können. Ein weiterer Vorteil ist es, dass Partikel des Filtermediumkörpers, an dessen Seitenfläche sich die gasdurchlässige Medienlage befindet, von dieser Medienlage zurückgehalten werden. So kann beispielsweise ein Austrag von Aktivkohlepartikeln aus einem Filtermediumkörper mit aktivkohlehaltigem Filtermedium verhindert werden. Die gasdurchlässige Medienlage ist vorzugsweise eine Vlieslage.

Die Medienlage befindet sich insbesondere an einer Wandseite des Schadgas-Filtermediumkörpers. In Betracht kommt eine Anordnung der Medienlage an der Abströmseite des Schadgas-Filtermediumkörpers, an der sich auch das Stützelement befindet, wobei die Medienlage zwischen Stützelement und Abströmseite des Schadgas-Filtermediumkörpers liegt. Die Medienlage kann an das Stützelement angespritzt sein und hierdurch lagefixiert sein. Zusätzlich oder alternativ ist es auch möglich, zwischen die beiden Filtermediumkörper eine gasdurchlässige Medienlage, insbesondere Vlieslage, zu positionieren, wobei in diesem Fall Partikel von dem in Strömungsrichtung vorgelagerten Partikel-Filtermediumkörper zurückgehalten und eine Zufuhr der Partikel zum Schadgas-Filtermediumkörper verhindert wird. Außerdem wird auch die Reibung zwischen den Filtermediumkörpern reduziert.

Besonders vorteilhaft ist die Anordnung mindestens einer gasdurchlässigen Medienlage zwischen zwei als Faltenbalg ausgebildeten Filtermediumkörpern. Die Medienlage verhindert, dass sich die Falten eines Faltenbalgs in die Zwischenräume der Falten des anderen Faltenbalgs hinein erstrecken. Hierdurch ist es möglich, ein besonders effizientes Filterelement zu schaffen, da als Faltenbalg ausgebildete Partikel-Filtermediumkörper und Schadgas-Filtermediumkörper einen hohen Abscheidegrad aufweisen. Die Medienlage hat vorzugsweise eine hohe Durchlässigkeit für das gasförmige Fluid, insbesondere Luft, und stellt somit keinen großen Strömungswiderstand dar. Vorteilhaft ist die trennende Medienlage als Vlieslage ausgebildet.

In einer vorteilhaften Ausgestaltung befindet sich mindestens eine erste gasdurchlässige Medienlage zwischen den beiden Filtermediumkörpern und mindestens eine zweite gasdurchlässige Medienlage abströmseitig des Schadgas-Filtermediumkörpers. Die zweite Medienlage weist hierbei vorzugsweise einen größeren Abscheidegrad auf als die erste Medienlage.

Die Medienlage erstreckt sich vorzugsweise über die gesamte Wandseite des angrenzenden Filtermediumkörpers. Die Medienlage kann, gemäß weiterer vorteilhafter Ausführung, ebenfalls mit einer oder mit beiden Endscheiben verbunden sein. Alternativ kann es insbesondere für den Fall, dass die Endscheiben an den Filtermediumkörper angeschäumt werden, zweckmäßig sein, dass die Medienlage kürzer ist als der Filtermediumkörper, so dass sichergestellt ist, dass der Bereich um die Stirnseiten von dem Endscheibenmaterial vollständig umgeben ist.

Mindestens einer der Filtermediumkörper, insbesondere der Schadgas-Filtermediumkörper, weist mindestens zwei Teilkörper auf, welche jeweils an einer axialen Stirnseite miteinander verbunden sind. Insbesondere bei langen Filterelementen kann es fertigungstechnisch vorteilhaft sein, statt eines einstückigen Filtermediumkörpers mehrere kürzere Teilkörper zu fertigen und diese axial übereinander anzuordnen und miteinander zu einem längeren Filtermediumkörper zu verbinden. Die Verbindung kann beispielsweise über ein Klebemittel erfolgen. Die Teilkörper können vorteilhaft als gefaltete Filterbälge ausgeführt sein.

In einer Weiterbildung, in welcher der mehrteilige Filtermediumkörper außen liegend angeordnet ist, kann zwischen den beiden Teilkörpern ein Dichtungsträger eingebracht sein, welcher die Teilkörper radial außen überragt und ein Dichtungselement trägt. Der Dichtungsträger kann ein Kunststoffteil sein, an welchem das Dichtungselement angeformt, insbesondere angespritzt ist. Alternativ kann das Dichtungselement ein separates Element sein und beispielsweise in eine Nut des Dichtungsträgers eingebracht sein. Die Dichtungsanordnung dient der Abdichtung gegenüber dem Gehäuse, d.h. im eingebauten Zustand liegt das Dichtelement an einer Dichtfläche des Filtergehäuses an. Der Dichtungsträger kann einstückig mit dem Stützelement, insbesondere als radial erweiterter Bund, ausgeführt sein.

Die Erfindung bezieht sich des Weiteren auf eine Filtereinrichtung mit einem Filtergehäuse und einem im Filtergehäuse aufgenommenen, vorbeschriebenen Rundfilterelement. Die Filtereinrichtung kann in oder an einer Brennstoffzelle eingesetzt werden, insbesondere zur Filtration von Kathodenluft.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Rundfilterelements zur Filtration eines gasförmigen Fluids,
- Fig. 2: eine Seitenansicht des Rundfilterelements, teilweise im Schnitt,
- Fig. 3: einen Schnitt gemäß Schnittlinie A-A aus Fig. 2,
- Fig. 4: eine Ansicht von unten auf das Rundfilterelement,
- Fig. 5: eine perspektivische Ansicht eines Rundfilterelements in einem Gehäuse,
- Fig. 6: eine Detailansicht der Abdichtung zwischen Rundfilterelement und Gehäuse,
- Fig. 7: eine perspektivische Ansicht eines Rundfilterelements in einer weiteren Ausführungsform,
- Fig. 8: eine Schnittdarstellung der Ausführungsform nach Fig.7,
- Fig. 9: eine Detailansicht der Abdichtung in der Ausführungsform nach Fig. 7 und 8.

In den Figuren sind gleiche Bauteile mit gleichen Bezugszeichen versehen.

### Ausführungsform(en) der Erfindung

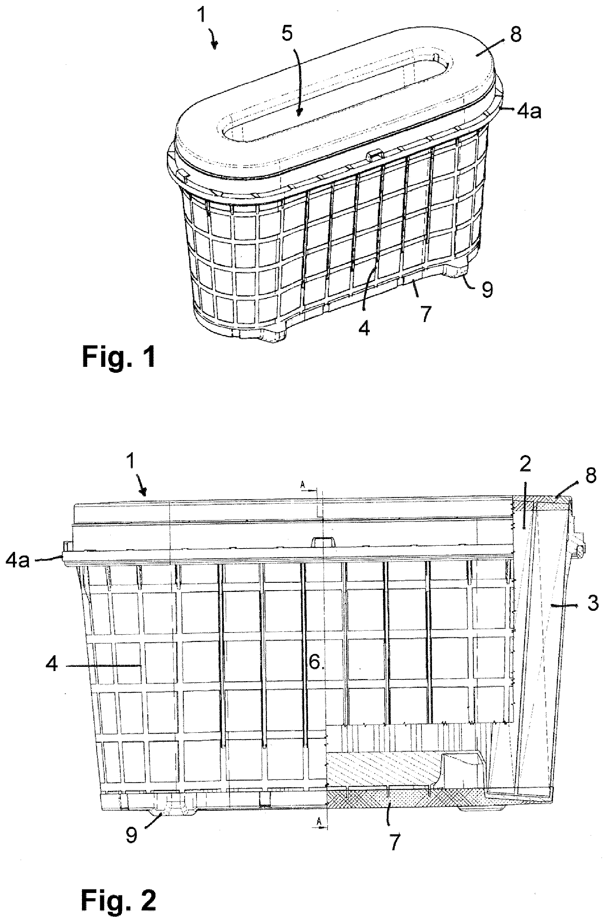

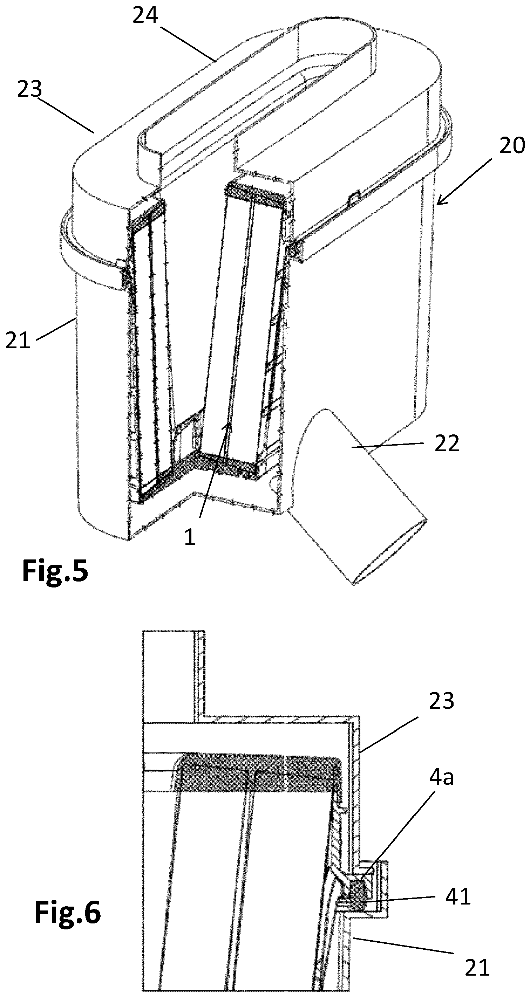

In Figuren1 bis 4 ist ein Rundfilterelement 1 zur Filtration eines gasförmigen Fluids wie beispielsweise Luft dargestellt. Das Rundfilterelement 1 kann Bestandteil einer in Fig. 5 dargestellten Filtereinrichtung mit einem Filtergehäuse sein, in das das Rundfilterelement 1 eingesetzt wird. Die Filtereinrichtung wird beispielsweise zur Filtration der Frischluft verwendet, die einer Brennstoffzelle zugeführt wird.

Das Rundfilterelement 1 weist zwei als Hohlkörper ausgeführte Filtermediumkörper 2, 3 auf, die konzentrisch zueinander angeordnet sind. Der erste, innenliegende Filtermediumkörper 2 fungiert als Partikel-Filtermediumkörper und der zweite, außenliegende Filtermediumkörper 3 als Schadgas-Filtermediumkörper. Die Filtermediumkörper 2 sind ähnlich wie ein Hohlzylinder ausgebildet, sie weisen jedoch keine runde, sondern eine langgestreckte Querschnittsform mit halbkreisförmigen Schmalseiten und geradlinigen oder gleich konkav ausgebildeten Längsseiten auf. Beide Filtermediumkörper 2, 3 umschließen einen innenliegenden Strömungsraum 5, der das ungereinigte Rohfluid aufnimmt. Aus dem Strömungsraum 5 durchströmt das ungereinigte Rohfluid in Radialrichtung zunächst den innenliegenden Partikel-Filtermediumkörper 2 und unmittelbar anschließend den umgreifenden, außenliegenden Schadgas-Filtermediumkörper 3. Die innenliegende Wandseite des Partikel-Filtermediumkörpers 2 bildet die Roh- oder Anströmseite, die außenliegende Wandseite des Schadgas-Filtermediumkörpers 3 die Rein- oder Abströmseite.

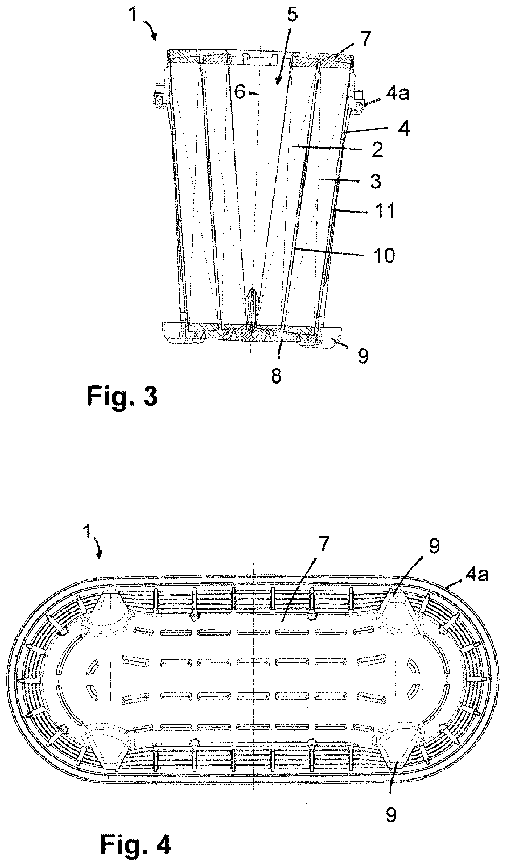

Das Rundfilterelement 1 weist in Achsrichtung - bezogen auf die Längsachse 6 (Fig. 2, 3) - eine sich verändernde Querschnittsfläche auf. Die Querschnittsfläche wächst in der gezeigten Darstellung gemäß Figuren 1 bis 3 von unten bis oben kontinuierlich an, dementsprechend befindet sich die kleinste Querschnittsfläche an der unteren Stirnseite und die größte Querschnittsfläche an der oberen Stirnseite.

Die beiden Filtermediumkörper 2, 3 sind jeweils als Balgfilter mit einer Vielzahl von Filterfalten ausgebildet, die sich in Umfangsrichtung jedes Filtermediumkörpers 2, 3 erstrecken.

Die beiden Filtermediumkörper 2, 3 werden radial von innen nach außen durchströmt. Der innenliegende Partikel-Filtermediumkörper 2 dient zur Absonderung von Partikeln im herangeführten Fluid. Der stromab des Partikel-Filtermediumkörpers 2 angeordnete, außenliegende Schadgas-Filtermediumkörper 3 dient zur Abscheidung von Schadgasen wie zum Beispiel Schwefeldioxid, Stickoxid oder Ammoniak und kann als Filtermittel Aktivkohle enthalten.

An der Außenseite des Rundfilterelements, welche von der außenliegenden Wandseite des Schadgas-Filtermediumkörpers 3 gebildet ist, befindet sich ein gasdurchlässiges Stützelement in Form eines Stützgitters 4, welches sich über die gesamte außenliegende Wandseite in Umfangsrichtung und in Achsrichtung erstreckt. Das Stützgitter 4 weist in Achsrichtung und in Umfangsrichtung verlaufende Streben und zwischenliegende Ausnehmungen auf, über die das gereinigte Fluid austreten kann. Das Stützgitter 4 besteht vorteilhafterweise aus Kunststoff und dient zur radialen Abstützung des außenliegenden Schadgas-Filtermediumkörpers 3 und indirekt auch des innenliegenden Partikel-Filtermediumkörpers 2.

Einteilig mit dem Stützgitter 4 ist ein radial erweiterter Bund 4a ausgebildet, der zur seitlichen Abstützung und Abdichtung im aufnehmenden Filtergehäuse dient. Der radial erweiterte Bund 4a befindet sich benachbart zur oberen Stirnseite des Rundfilterelementes 1.

Die axial gegenüberliegenden Stirnseiten der Filtermediumkörper 2 und 3 sind von jeweils einer Endscheibe 7 und 8 strömungsdicht abgedeckt. Die untere Endscheibe 7 ist durchgehend und ohne Ausnehmung ausgebildet, wohingegen die obere Endscheibe 8 eine zentrische, längsgestreckte Ausnehmung aufweist, über die das Rohfluid axial in den innenliegenden Strömungsraum einströmen kann.

Die untere Endscheibe 7 und die obere Endscheibe 8 können als Gussbauteil ausgeführt sein. Jede Endscheibe 7, 8 deckt strömungsdicht die Stirnseite sowohl des Partikel-Filtermediumkörpers 2 als auch des Schadgas-Filtermediumkörpers 3 ab. Man erhält somit eine strömungsdichte Abdeckung an jeder Stirnseite mit nur jeweils einer Endscheibe 7, 8. Dies hat zugleich den Vorteil, dass die Relativposition der beiden Filtermediumkörper 2, 3 zueinander fixiert ist. In den Endscheiben 7, 8 ist auch ein Abschnitt des Stützgitters 4 aufgenommen, so dass auch das Stützgitter 4 über die Endscheiben 7, 8 gehalten und in seiner Relativlage zu dem außenliegenden Schadgas-Filtermediumkörper 3 fixiert ist.

An der unteren, geschlossen ausgebildeten Endscheibe 7 sind seitlich herausragende Abstützfüße 9 angeformt, welche einteilig mit der unteren Endscheibe 7 ausgebildet sind. Die Abstützfüße 9, welche sich im Übergang zwischen jeder Längsseite zu den halbkreisförmigen Schmalseiten befinden, erlauben insbesondere eine seitliche Abstützung im aufnehmenden Filtergehäuse, gegebenenfalls auch eine axiale Abstützung. Insgesamt sind vier derartige Abstützfüße 9 an der unteren Endscheibe 7 ausgebildet.

Zwischen dem innenliegenden Partikel-Filtermediumkörper 2 und dem außenliegenden, umgreifenden Schadgas-Filtermediumkörper 3 befindet sich ein schmaler Spalt. In diesem Spalt liegt eine gasdurchlässige Medienlage in Form einer inneren Vlieslage 10, welche reibungsmindernd wirkt und eventuell auftretende, kleine Relativbewegungen zwischen den Filtermediumkörpern 2 und 3 aufgrund ihrer reibungsmindernden Eigenschaften ohne Beschädigung des Filtermaterials ermöglicht. Die Vlieslage 10 verhindert, dass sich die Filterfalten der Filtermediumkörper 2 und 3 ineinander verhaken. Die Vlieslage 10 verhindert außerdem, dass Partikel, welche den innenliegenden Partikel-Filtermediumkörper 2 passieren, versehentlich in den Schadgas-Filtermediumkörper 3 gelangen.

Eine weitere gasdurchlässige Medienlage in Form einer äußeren Vlieslage 11 befindet sich an der außenliegenden Wandseite des Schadgas-Filtermediumkörpers 3. Die Vlieslage 11 grenzt unmittelbar an das Stützgitter 4 an und befindet sich somit zwischen dem Schadgas-Filtermediumkörper 3 und dem Stützgitter 4. Auch die Vlieslage 11 wirkt reibungsmindernd und verhindert auf diese Weise einen unerwünschten Reibkontakt zwischen dem Schadgas-Filtermediumkörper 3 und dem Stützgitter 4.

In Figur 5 ist ein öffenbares Filtergehäuse 20 mit darin aufgenommenem Rundfilterelement 1 dargestellt. Das Filtergehäuse 20 weist ein erstes Gehäuseteil 21 und ein zweites Gehäuseteil 23 auf. Am ersten Gehäuseteil 21 ist ein Stutzen 22 angeordnet, welcher im dargestellten Beispiel den Auslass für das Reinfluid bildet. Das zweite Gehäuseteil 23 verfügt über eine zentrale Öffnung 24 mit einem umlaufenden Kragen, über welche das zu reinigende Rohfluid in das Filtergehäuse 20 einleitbar ist. Das zu reinigende Gas tritt durch die Öffnung 24 in das Filtergehäuse 20 ein, durchströmt die beiden Filtermediumkörper 2, 3 des Filterelements 1 von radial innen nach radial außen und verlässt das Filtergehäuse 20 als gereinigtes Gas über den Stutzen 22. Eine umgekehrte Durchströmung des Filtergehäuses 20 ist ebenfalls denkbar, wobei das Filterelement 1 dann entsprechend zur Durchströmung von außen nach innen ausgelegt ist.

In Figur 6 ist ein Ausschnitt aus einem Filtergehäuse 20 mit eingebautem Rundfilterelement 1 dargestellt. Das Stützgitter 4 des Rundfilterelements 1 weist einen erweiterten Bund 4a auf, welcher eine nach axial unten gerichtete Nut bildet. In diese Nut ist ein Dichtungselement 41, beispielsweise ein O-Ring, eingelegt. Die Dichtung könnte auch anders ausgestaltet sein, beispielsweise an den erweiterten Bund 4a angeschäumt sein. Das erste Gehäuseteil 21 weist eine umlaufende Anlagefläche für das Dichtungselement 41 auf. Beim Verschließen des Filtergehäuses 20 wird das Dichtungselement axial gegen diese Anlagefläche gepresst und dichtet so die Reinseite von der Rohseite ab.

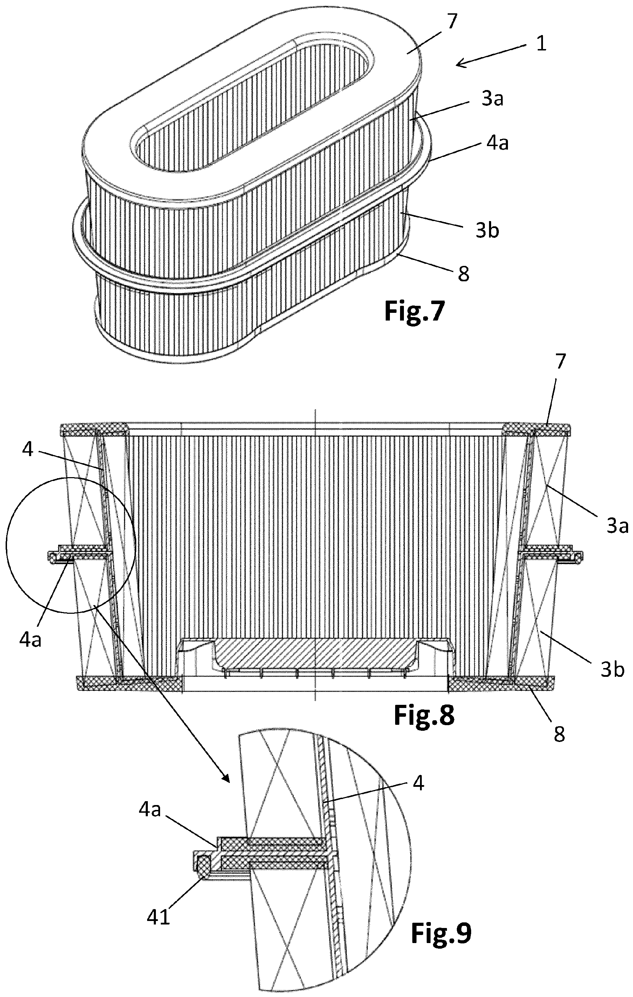

In Figuren 7 - 9 ist eine vorteilhafte weitere Ausführungsform eines Rundfilterelements mit einem zweiteiligen Schadgas-Filtermediumkörper 3 dargestellt. Der radial innen liegende Partikel-Filtermediumkörper 2 ist einteilig ausgebildet. Der Schadgas-Filtermediumkörper 3 besteht hier aus zwei Teilkörpern 3a, 3b. Diese sind in axialer Richtung gleich lang, könnten jedoch auch unterschiedliche Längen aufweisen. Beide Teilkörper 3a, 3b sind als Faltenbalg ausgeführt. Während die einander abgewandten Stirnseiten der beiden Bälge 3a, 3b in die Endscheiben 7, 8 eingebettet sind, sind die beiden einander zugewandten Stirnseiten mit Klebstoff abgedichtet. An der radial innen liegenden Seitenwand der beiden Teilkörper 3a, 3b ist ein Stützgitter 4 angeordnet, welches einen erweiterten Bund 4a aufweist, der sich zwischen den beiden Teilkörpern 3a, 3b hindurch nach radial außen erstreckt und über die Teilkörper 3a, 3b übersteht. Der erweiterte Bund 4a weist eine umlaufende Nut auf, in welche ein ringförmiges Dichtungselement 41 eingebracht ist. Die Stirnseiten der Teilkörper 3a, 3b sind vorzugsweise mit dem erweiterten Bund 4a verklebt, wobei dann kein zusätzlicher Klebstoff zur Abdichtung der offenen Stirnseiten nötig ist.

In einer nicht dargestellten alternativen Ausgestaltung sind die Teilkörper 3a, 3b direkt miteinander verklebt. Die Abdichtung zum Gehäuse kann dann beispielweise wie bei dem in Figur 1 dargestellten Ausführungsbeispiel über eine an einem radial außenliegenden Stützgitter angeordnete Dichtungsanordnung erfolgen oder ein separater Dichtungsträger kann im Bereich der oberen Endscheibe 7 angeordnet, insbesondere in diese eingebettet, sein.

## Patentansprüche

1. Rundfilterelement zur Filtration eines gasförmigen Fluids, mit einem als Hohlkörper ausgebildeten Partikel-Filtermediumkörper (2) zur Partikelfiltration des gasförmigen Fluids und mit einem separaten, als Hohlkörper ausgebildeten Schadgas-Filtermediumkörper (3) zur Schadgasfiltration, der konzentrisch zum Partikel-Filtermediumkörper (2) angeordnet ist, wobei die beiden Filtermediumkörper (2, 3) einen innenliegenden Strömungsraum (5) umschließen, wobei eine Stirnseite sowohl des Partikel-Filtermediumkörpers (2) als auch des Schadgas-Filtermediumkörpers (3) von einer ersten gemeinsamen Endscheibe (7) strömungsdicht abgedeckt ist, und wobei auch die gegenüberliegende Stirnseite sowohl des Partikel-Filtermediumkörpers (2) als auch des Schadgas-Filtermediumkörpers (3) von einer zweiten gemeinsamen Endscheibe (8) strömungsdicht abgedeckt ist, **dadurch gekennzeichnet, dass** ein gasdurchlässiges Stützelement (4) an der Wandseite eines Filtermediumkörpers (2, 3) angeordnet ist, wobei das Stützelement (4) in das Material mindestens einer Endscheibe (7, 8) hineinragt und fest mit der Endscheibe (7, 8) verbunden ist, und wobei mindestens einer der Filtermediumkörper (2, 3) mindestens zwei Teilkörper (3a, 3b) aufweist, welche jeweils an einer axialen Stirnseite miteinander verbunden sind.

2. Rundfilterelement nach Anspruch 1, **dadurch gekennzeichnet, dass** das Stützelement (4) in das Material beider Endscheiben (7, 8) hineinragt und fest mit den beiden Endscheiben (7, 8) verbunden ist.

3. Rundfilterelement nach Anspruch 1 oder 2, **dadurch gekennzeichnet, dass** die Endscheiben (7, 8) als Gussbauteil ausgeführt sind und ein Abschnitt des Stützelements (4) vom Endscheibenmaterial umgeben ist.

4. Rundfilterelement nach einem der Ansprüche 1 bis 3, **dadurch gekennzeichnet, dass** an einer Endscheibe (7, 8) seitlich herausragende Abstützfüße (9) angeordnet sind.

5. Rundfilterelement nach einem der Ansprüche 1 bis 4, **dadurch gekennzeichnet, dass** der Partikel-Filtermediumkörper (2) innenliegend unmittelbar angrenzend zum innenliegenden Strömungsraum (5) angeordnet ist und dass der Schadgas-Filtermediumkörper (3) außen liegt und den innenliegenden Partikel-Filtermediumkörper (2) umgreift.

6. Rundfilterelement nach einem der Ansprüche 1 bis 5, **dadurch gekennzeichnet, dass** zumindest ein Filtermediumkörper (2, 3), vorzugsweise beide Filtermediumkörper (2, 3) als Filterbalg ausgebildet sind.

7. Rundfilterelement nach einem der Ansprüche 1 bis 6, **dadurch gekennzeichnet, dass** mindestens eine gasdurchlässige Medienlage (10, 11) an der Wandseite eines Filtermediumkörpers (2, 3) angeordnet ist.

8. Rundfilterelement nach Anspruch 7, **dadurch gekennzeichnet, dass** die Medienlage (10) zwischen den beiden Filtermediumkörpern (2, 3) angeordnet ist.

9. Rundfilterelement nach Anspruch 7 oder 8, **dadurch gekennzeichnet, dass** die Medienlage (11) an der Reinseite des Schadgas-Filtermediumkörpers (3) angeordnet ist.

10. Rundfilterelement nach einem der vorangehenden Ansprüche, **dadurch gekennzeichnet, dass** das Stützgitter (4) mit einem Dichtungsträger (4a) verbunden, insbesondere einteilig ausgeführt ist.

11. Rundfilterelement nach Anspruch 1, **dadurch gekennzeichnet, dass** der mehrteilige Filtermediumkörper (3) außen liegend angeordnet ist und zwischen den beiden Teilkörpern (3a, 3b) ein Dichtungsträger (4a) eingebracht ist, welcher die Teilkörper (3a, 3b) radial außen überragt und ein Dichtungselement (41) trägt.

12. Filtereinrichtung mit einem Rundfilterelement (1) nach einem der Ansprüche 1 bis 11 und mit einem öffenbaren Filtergehäuse zur Aufnahme des Rundfilterelements (1).

13. Verwendung einer Filtereinrichtung nach Anspruch 12 in einer Brennstoffzelle.

## Claims

1. A round filter element for filtering a gaseous fluid, with a particle filter medium body (2) designed as a hollow body for particle filtration of the gaseous fluid and with a separate harmful gas filter medium body (3) designed as a hollow body for harmful gas filtration, which is disposed concentrically to the particle filter medium body (2), wherein the two filter medium bodies (2, 3) enclose an internal flow chamber (5), wherein a front face of both the particle filter medium body (2) and the harmful gas filter medium body (3) is covered in a flow-tight manner by a first common end plate (7), and wherein the opposite front face of both the particle filter medium body (2) and the harmful gas filter medium body (3) is also covered in a flow-tight manner by a second common end plate (8), **characterized in that** a gas-permeable support member (4) is disposed on the wall side of a filter medium body (2, 3), wherein the support member (4) protrudes into the material of at least one end plate (7, 8) and is firmly connected to the end plate (7, 8), and wherein at least one of the filter medium bodies (2, 3) features at least two part bodies (3a, 3b) which are connected to each other at an axial front face.

2. The round filter element according to claim 1, **characterized in that** the support member (4) protrudes into the material of both end discs (7, 8) and is firmly connected to both end discs (7, 8).

3. The round filter element according to claim 1 or 2, **characterized in that** the end discs (7, 8) are designed as cast components and a section of the support member (4) is surrounded by the end disc material.

4. The round filter element according to one of the claims 1 to 3, **characterized in that** support feet (9) projecting laterally are disposed on an end disc (7, 8).

5. The round filter element according to one of the claims 1 to 4, **characterized in that** the particle filter medium body (2) is disposed internally immediately adjacent to the internal flow chamber (5) and that the harmful gas filter medium body (3) is located externally and surrounds the internal particle filter medium body (2).

6. The round filter element according to one of the claims 1 to 5, **characterized in that** at least one filter medium body (2, 3), preferably both filter medium bodies (2, 3), are designed as filter bellows.

7. The round filter element according to one of the claims 1 to 6, **characterized in that** at least one gas-permeable media layer (10, 11) is disposed on the wall side of a filter medium body (2, 3).

8. The round filter element according to claim 7, **characterized in that** the media layer (10) is disposed between the two filter medium bodies (2, 3).

9. The round filter element according to claim 7 or 8, **characterized in that** the media layer (11) is disposed on the clean side of the harmful gas filter medium body (3).

10. The round filter element according to one of the preceding claims, **characterized in that** the support grid (4) is connected to a seal carrier (4a) and, in particular, is realized as monolithic part.

11. The round filter element according to claim 1, **characterized in that** the multipart filter medium body (3) is disposed on the outside and a seal carrier (4a) is inserted between the two part bodies (3a, 3b), which protrudes radially outside the part bodies (3a, 3b) and carries a sealing element (41).

12. A filter device with a round filter element according to one of the claims 1 to 11 and with an openable filter housing for receiving the round filter element (1).

13. A use of a filter device according to claim 12 in a fuel cell.

## Revendications

1. Élément filtrant rond destiné à la filtration d'un fluide gazeux, ayant un corps de milieu filtrant les particules (2) conçu comme un corps creux pour la filtration des particules du fluide gazeux et ayant un corps de milieu filtrant les gaz toxiques (3) séparé, conçu comme un corps creux pour la filtration des gaz toxiques, qui est disposé de manière concentrique par rapport au corps de milieu filtrant les particules (2), les deux corps de milieu filtrant (2, 3) entourant un espace d'écoulement interne (5), une face frontale tant du corps de milieu filtrant les particules (2) que du corps de milieu filtrant les gaz toxiques (3) étant recouverte de manière étanche à l'écoulement par un premier disque d'extrémité commun (7), et la face frontale opposée tant du corps de milieu filtrant les particules (2) que du corps de milieu filtrant les gaz toxiques (3) étant également recouverte de manière étanche par un deuxième disque d'extrémité commun (8), **caractérisé en ce qu'**un élément de support perméable aux gaz (4) est disposé sur le côté paroi d'un corps de milieu filtrant (2, 3), l'élément de support (4) faisant saillie dans le matériau d'au moins un disque d'extrémité (7, 8) et étant relié de manière fixe au disque d'extrémité (7, 8), et au moins l'un des corps de milieu filtrant (2, 3) présentant au moins deux corps partiels (3a, 3b) qui sont reliés l'un à l'autre respectivement au niveau d'une face frontale axiale.

2. Élément filtrant rond selon la revendication 1, **caractérisé en ce que** l'élément de support (4) fait saillie dans le matériau des deux disques d'extrémité (7, 8) et est relié de manière fixe aux deux disques d'extrémité (7, 8).

3. Élément filtrant rond selon la revendication 1 ou 2, **caractérisé en ce que** les disques d'extrémité (7, 8) sont réalisés sous forme de pièce moulée et qu'une partie de l'élément de support (4) est entourée par le matériau des disques d'extrémité.

4. Élément filtrant rond selon l'une quelconque des revendications 1 à 3, **caractérisé en ce que** des pieds d'appui (9) dépassant latéralement sont disposés sur un disque d'extrémité (7, 8).

5. Élément filtrant rond selon l'une quelconque des revendications 1 à 4, **caractérisé en ce que** le corps de milieu filtrant les particules (2) est disposé à l'intérieur, directement adjacent à l'espace d'écoulement intérieur (5), et **en ce que** le corps de milieu filtrant les gaz toxiques (3) est situé à l'extérieur et entoure le corps de milieu filtrant les particules (2) situé à l'intérieur.

6. Élément filtrant rond selon l'une quelconque des revendications 1 à 5, **caractérisé en ce qu'**au moins un corps de milieu filtrant (2, 3), de préférence les deux corps de milieu filtrant (2, 3), sont conçus comme des soufflets de filtre.

7. Élément filtrant rond selon l'une quelconque des revendications 1 à 6, **caractérisé en ce qu'**au moins une couche de média perméable au gaz (10, 11) est disposée sur la face murale d'un corps de milieu filtrant (2, 3).

8. Élément filtrant rond selon la revendication 7, **caractérisé en ce que** la couche de média (10) est disposée entre les deux corps de milieu filtrant (2, 3).

9. Élément filtrant rond selon la revendication 7 ou 8, **caractérisé en ce que** la couche de média (11) est disposée sur le côté pur du corps de milieu filtrant les gaz toxiques (3).

10. Élément filtrant rond selon l'une quelconque des revendications précédentes, **caractérisé en ce que** la grille de support (4) est reliée à un porte-joint (4a), en particulier réalisée d'un seul tenant.

11. Élément filtrant rond selon la revendication 1, **caractérisé en ce que** le corps de milieu filtrant en plusieurs parties (3) est disposé à l'extérieur et qu'un porte-joint (4a) est inséré entre les deux parties (3a, 3b), lequel dépasse radialement à l'extérieur des parties (3a, 3b) et porte un élément d'étanchéité (41).

12. Dispositif de filtration avec un élément filtrant rond (1) selon l'une quelconque des revendications 1 à 11 et un boîtier de filtre ouvrable destiné à recevoir l'élément filtrant rond (1).

13. Utilisation d'un dispositif de filtration selon la revendication 12 dans une pile à combustible.
